(19) Europäisches Patentamt

European Patent Office

Office européen des brevets

(11) EP 0 716 054 A2

(12) **EUROPÄISCHE PATENTANMELDUNG**

(43) Veröffentlichungstag:
12.06.1996 Patentblatt 1996/24

(51) Int Cl.6: **C04B 35/638**, C04B 35/468,
C04B 35/64

(21) Anmeldenummer: 95203341.3

(22) Anmeldetag: 04.12.1995

(84) Benannte Vertragsstaaten:
**DE FR GB**

(30) Priorität: 06.12.1994 DE 4443365

(71) Anmelder:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**FR GB**

(72) Erfinder:
• **Hennings, Detlev Dr.,**
**c/o Philips Patentverwaltung**
**D-22335 Hamburg (DE)**
• **Schreinemacher, Herbert,**
**c/o Philips Patentverwal.**
**D-22335 Hamburg (DE)**

(74) Vertreter: **Volmer, Georg, Dipl.-Ing.**
**Philips Patentverwaltung GmbH,**
**Röntgenstrasse 24**
**D-22335 Hamburg (DE)**

(54) **Brenn- und Sinterverfahren für ein keramisches elektronisches Bauteil**

(57) Durch ein Verfahren zur Herstellung eines keramischen elektronischen Bauteils, das im wesentlichen aus einer dielektrischen Oxidkeramik und mindestens einer palladiumhaltigen Komponente besteht, durch Brennen und Sintern eines organische Bindemittel enthaltenden grünen Körpers, bei dem der Brennprozeß einen ersten Schritt umfaßt, bei dem das Bindemittel aus dem bindemittelhaltigen grünen Körper durch eine Wassergasreaktion in wasserdampfhaltiger, im wesentlichen sauerstofffreier Atmosphäre bei Temperaturen zwischen 20°C und 880°C entfernt wird und in einem zweiten Schritt die dielektrische Oxidkeramik in einer Atmosphäre mit einem Sauerstoffgehalt von 10 bis 100 Volumen-% bei einer Temperatur von 880°C bis 900°C nachoxidiert wird, werden Bauteile erhalten, deren palladiummetallhaltige Komponente nicht delaminiert und die sehr gute dielektrische Eigenschaften haben.

**Beschreibung**

Die Erfindung bezieht sich auf ein Verfahren zur Herstellung eines keramischen elektronischen Bauteils, wobei das Bauteil im wesentlichen aus einer dielektrischen Oxidkeramik und mindestens einer palladiumhaltigen Komponente besteht, durch Brennen und Sintern eines organische Bindemittel enthaltenden grünen Körpers. Insbesondere bezieht sich das Verfahren auf die Herstellung eines Bauteils aus metallisierter Vielschichtelektrokeramik.

Zur Herstellung eines keramischen elektronischen Bauteils ist es im allgemeinen notwendig, einen keramischen Körper mit elektrischen Anschlüssen, d.h. Kontakten oder Elektroden, zu versehen, wobei diese Kontakte und/oder Elektroden aus metallischen Werkstoffen bestehen. Die Herstellung keramischer elektronischer Bauteile erfordert damit die Herstellung eines Verbundes aus zwei recht unterschiedlichen Werkstoffen, nämlich der Elektrokeramik und der elektrisch leitenden metallischen Komponente.

Ein Beispiel hierfür ist die Herstellung von integrierten Schaltungen, bei der metallische Leiterbahnen auf $Al_2O_3$-Substraten in Dickfilm- oder Dünnfilmtechnik aufgebracht werden. Für die Herstellung von Kondensatoren, Spulen, Speichern, Aktuatoren ist ebenfalls die Kontaktierung einer Keramik mit Metallschichten erforderlich. Einen Sonderfall stellen die Vielschichtkondensatoren, Vielschichtvaristoren und Vielschichtaktuatoren dar, bei denen die Metallelektroden gemeinsam mit der Keramik gebrannt und gesintert werden müssen. Dieser Brenn- und Sinterprozeß für Vielschichtbauelemente wirft besondere Probleme auf.

Vielschichtkondensatoren-, aktuatoren und -varistoren haben ein gemeinsames Bauprinzip, für das "grüne" (ungebrannte) keramische Substratfolien, die einen erheblichen Anteil organischer Bindemittel enthalten, mit darauf aufgebrachten metallischen Strompfaden aus Edelmetallen wie Palladium, Silber, Gold, die zusammen den "grünen Körper" bilden, zu einem komplexen dreidimensionalen Verbund zusammengesintert werden.

Besonders kritische Prozeßschritte sind der Binderausbrand und die anschließende Sinterung. Der Ausbrand des organischen Binders geschieht gewöhnlich durch sehr langsames Aufheizen des grünen Keramikkörpers in sauerstoffarmer Atmosphäre in speziellen Binderausbrandöfen. Dabei kann es trotzdem zu einer unkontrollierten, heftigen Verbrennung der organischen Bestandteile des Binders kommen, besonders wenn die Reaktion durch die katalytische Wirkung einer Metallisierung, die die Platinmetalle Platin oder Palladium enthält, noch beschleunigt wird. Auch wenn die Reaktion so langsam gefahren wird, daß es nicht zu spektakulären Verpuffungen kommen kann, führt die schwer kontrollierbare palladium- oder platinkatalysierte Verbrennung des organischen Binders in sauerstoffhaltiger Atmosphäre oft zu einer Verminderung der Haftung an der Grenzfläche zwischen Metall und Keramik und letztendlich zu einer Delamination des Stapelverbundes.

Ein Binderausbrand in inerter oder gar reduzierender Atmosphäre würde diese Fehlerquellen vermeiden, verursacht jedoch wiederum Probleme durch die Defektchemie der oxidkeramischen Komponenten. Beispielsweise ist es für Bariumtitanat seit langem bekannt, daß es beim Erhitzen in reduzierender und selbst schon in inerter Atmosphäre Sauerstoff abgibt und dabei halbleitend wird:

$$BaTiO_3 \; \rightleftharpoons BaTiO_{3-\delta}\square_\delta \; + \; \delta/2 \; O_2$$

Diese Reaktion ist in Vielschichtbauteilen gewöhnlich nicht reversibel. Vielschichtbauteile, z.B. Vielschichtkondensatoren aus Bariumtitanatmaterialien, dürfen deshalb nicht in einer inerten oder gar reduzierenden Atmosphäre gebrannt werden. Wurde die Oxidkeramik einmal reduziert, dann ist eine nachträgliche Oxidation des dann halbleitenden Materials in den Vielschichtkondensatoren durch die enge und flächige Anordnung der Elektroden so sehr erschwert, daß diese auch nach längerer oxidierender Nachbehandlung selbst bei hohen Temperaturen oberhalb 1200°C einen zu niedrigen Isolationswiderstand aufweisen.

Ein weiteres Problem entsteht beim Aufheizen von mit Palladium metallisierten grünen Körpers in oxidierender Atmosphäre dadurch, daß das Palladium in den Elektrodenschichten bei mittleren Temperaturen zunächst mehr oder weniger stark oxidiert wird. Bei weiterer Temperaturerhöhung zersetzt sich dieses Oxid dann wieder zu dem Metall und Sauerstoff. Die anfängliche Oxidation des Palladiums erfolgt in einem breiten Temperaturbereich zwischen 450°C und 600°C, die Zersetzung in einem engen Temperaturbereich von 800°C bis 850°C.

Diese beiden Reaktionen bedingen jeweils starke Volumenänderungen in den Elektrodenschichten, sodaß dieser Teil des Brenn- und Sinterprozesses wieder eine sehr kritische Fertigungsphase darstellt, die ebenfalls Anlaß zur Delamination der Vielschichtbauteile sein kann. Besonders kritisch ist die endotherme Zersetzungsreaktion des Palladiumoxides, weil dabei eine starke Volumenänderung von rund 60% in einem relativ engen Temperaturbereich stattfindet.

Zur Lösung dieses Problems wird in Ber. Dt. Keram. Ges. 56 (1979) Nr. 11-12, 337-341 vorgeschlagen, die unerwünschten Reaktionen des Palladiums dadurch zu vermeiden, daß die keramische Masse durch Zusätze so verändert wird, daß sie unterhalb von 1145°C gebrannt werden kann, und daß man bei Beendigung des Brandes die Kermik in Stickstoff abkühlt. Es ist jedoch nicht generell möglich, die oxidkeramischen dielektrischen Werkstoffe, die in keramischen elektronischen Bauteilen verwendet werden, durch Zusätze so zu konditionieren, daß sie problemlos unter 1145°C gesintert werden können. Andererseits reicht die Maßnahme, daß die Keramik nach dem Brand unter Stickstoff abgekühlt wird, allein nicht aus.

Es ist daher die Aufgabe der vorliegenden Erfindung, ein Verfahren zur Herstellung eines keramischen elektronischen Bauteils, das im wesentlichen aus einer dielektrischen Oxidkeramik und mindestens einer palladiumhaltigen Elektrode besteht, durch Brennen und Sintern eines organische Bindemittel enthaltenden grünen Körpers, anzugeben, durch das die Eigenschaften des Bauteils verbessert und die Fertigungssicherheit erhöht wird.

Erfindungsgemäß wird die Aufgabe gelöst durch ein Verfahren, das dadurch gekennzeichnet ist, daß der Brennprozeß einen ersten Schritt umfaßt, bei dem das Bindemittel aus dem bindemittelhaltigen grünen Körper durch eine Wassergasreaktion in wasserdampfhaltiger, im wesentlichen sauerstofffreier Atmosphäre bei Temperaturen zwischen 20°C und 880°C entfernt wird und in einem zweiten Schritt die dielektrische Oxidkeramik in einer Atmosphäre mit einem Sauerstoffgehalt von 10 bis 100 Vol-% bei einer Temperatur von 880°C bis 900°C nachoxidiert wird.

Ein derartiges Verfahren hat den Vorteil, daß der Binderausbrandreaktion durch die Wassergasreaktion in einer endothermen Reaktion und deshalb langsam und gut steuerbar erfolgt. Da keine plötzliche unkontrollierte Temperaturerhöhung durch einen explosionsartigen exothermen Binderausbrand zu befürchten ist, kann der Brennprozeß zeitlich verkürzt werden. Die organischen Bestandteile des Binders werden vollständig oxidiert, ohne daß Kohlenstoffnester zurückbleiben. Gleichzeitig wird die Oxidkeramik nicht oder nur geringfügig reduziert, zum anderen - das ist wesentlich - werden die palladiumhaltigen Komponenten auch nicht oxidiert. Dadurch entfällt die Zersetzungsreaktion des Palladiumoxids bei höheren Temperaturen.

Durch diesen Brennprozeß lassen sich daher die Delaminationen an der Grenzfläche zwischen der palladiumhaltigen Metallisierungsschicht und der dielektrischen Keramik minimieren.

Das Verfahren ermöglicht es, den Binderausbrand und die Sinterung der grünen Körper in ein und demselben Ofen unter zügigen Aufheizbedingungen ablaufen zu lassen. Dadurch können die Prozeßkosten erheblich gesenkt werden.

Die nach diesem Verfahren hergestellten Bauteile haben sehr gute dielektrische Eigenschaften, da die oxidkeramischen Bestandteile nach der oxidativen Nachbehandlung vollständig in der höchsten Oxidationsstufe vorliegen.

Es kann bevorzugt sein, daß die wasserdampfhaltige, im wesentlichen sauerstofffreie Atmosphäre ein Inertgas enthält. Dadurch läßt sich der Partialdruck des Wasserdampfes und somit auch die Reaktionsgeschwindigkeit der Wassergasreaktion steuern.

Nach einer bevorzugten Ausführung der Erfindung wird die Wassergasreaktion mit bei Raumtemperatur befeuchtetem Stickstoff bei einer Temperatur von 400°C bis 850 °C durchgeführt.

Es kann auch bevorzugt sein, daß der Wasserdampfgehalt in der wasserdampfhaltigen, im wesentlichen sauerstoffreien Atmosphäre in der Temperaturzone zwischen 200°C und 880°C durch zusätzlichen Wasserdampf erhöht wird.

Im Rahmen der vorliegenden Erfindung ist es bevorzugt, daß die palladiumhaltige Komponente außerdem Platin, Silber, Gold und/oder Nickel enthält.

Es ist weiterhin bevorzugt, daß die dielektrische Oxidkeramik aus einem einfachen oder substituierten Titanat oder einem einfachen oder substituierten Ferrit besteht.

Besonders bevorzugt ist es, daß die dielektrische Oxidkeramik aus einem vorwiegend mit Donatoren wie Niob, Cer, Lanthan und Kobalt dotiertem Bariumtitanat und die metallische Komponente aus einer Silberpalladiumlegierung besteht.

In folgenden wird die Erfindung weiter beschrieben und anhand von Beispielen erläutert.

Das Verfahren eignet sich besonders für keramische elektronische Bauteile, die aus einem Schichtverbundwerkstoff aus einem oxidkeramischen Werkstoff und einer oder mehreren schichtförmigen Metallisierungen bestehen. Das Bauprinzip des Schichtverbundes ist z.B. in elektronischen Bauteilen wie Leiterplatten, nichtflüchtigen Speichern, Spulen, Filtern wie Hochfrequenzfiltern, LC-Filtern und EMI-Filtern Varistoren und besonders in den Vielschichtbauelementen wie Vielschichtkondensatoren, Vielschichtvaristoren und Vielschichtaktuatoren enthalten.

Das Verfahren kann aber auch mit Vorteil für die Herstellung von Cermets (Durchdringungsverbundwerkstoff) eingesetzt werden, zum Beispiel zur Fertigung von elektrischen Kontakten mit Cermets aus Silber/Palladium-Metalloxid-Kontaktwerkstoffe mit Metalloxiden wie $SnO_2$ oder ZnO.

Der Herstellungsgang metallisierter oxidkeramischer Produkte gliedert sich in die folgenden Herstellungsschritte:

1. Oxidpulverherstellung,
2. Formgebung der Oxidkeramik
3. Metallisierung
4. Ofenprozeß
5. Nachbearbeitung

Diese sollen anhand der Herstellung von Vielschichtbauelementen näher erläutert werden.

Die Vielschichtbauelemente nach dem Stand der Technik bestehen aus einem laminierten Stapelverbund dünner, keramischer, dielektrischer Schichten, zwischen denen innere Elektroden liegen. Die inneren Elektroden sind durch äußere Kontakte miteinander verbunden.

Üblicherweise werden zur Herstellung solcher elektronischer Bauelemente mit Vielschichtstruktur zunächst grüne keramische Substratfolien aus den dielektrischen keramischen Komponenten und einer organischen Bindemittelzubereitung hergestellt.

Auf diese Substratfolien werden die inneren Elektroden aufgebracht, indem die grüne Keramik mit einer Metallisierungspaste in dem Elektrodenmuster beschichtet wird. Diese metallisierten grünen Substratfolien werden gestapelt, der Stapel wird zu einer Halbzeugplatte laminiert. Die Halbzeugplatten werden in die gewünschten Produkte getrennt. Dann wird zunächst der Binder ausgebrannt, dann die Keramik gesintert. Anschließend werden die äußeren Elektroden aufgebracht.

Die Werkstoffauswahl für die dielektrische oxidkeramische Komponente des Bauteils richtet sich nach dem Einsatzgebiet. Die Anwendungen betreffen vor allem kapazitive Elemente in elektronischen Schaltungen und Isolatoren. Spezielle Einsatzgebiete haben die dielektrischen Oxidkeramiken, die piezoelektrischen und ferroelektrischen Eigenschaften besitzen. Für Vielschichtkondensatoren wird als oxidkeramische Komponente im allgemeinen dotiertes Bariumtitanat verwendet. Die Keramik für Vielschichtaktuatoren basiert im allgemeinen auf einer abgewandelten Bleititanat-Bleizirkonat-Phase (PZT) mit piezoelektrischen Eigenschaften, die Keramik der Vielschichtvaristoren auf dotiertem Zinkoxid. Für die Herstellung von Speichern benötigt man Oxidkeramiken mit guten ferroelektrischen Eigenschaften, üblicherweise sind dies ebenfalls PZT-Phasen.

Auch Ferrite, insbesondere Ferrospinelle, werden in Verbindung mit Pd- oder AgPd-Elektroden für die Herstellung von Vielschicht-Induktoren, LC-Filter, monolithische RCL- Filter und EMI-Filter eingesetzt.

Als Metallisierungsfarbe für die palladiumhaltigen inneren Elektroden, Kontakte oder Leiterbahnen können handelsübliche Metallisierungspasten verwendet werden. Sie enthalten als metallische Komponente Palladium, Palladiumoxid, Silberpalladiumlegierungen oder andere Palladiumlegierungen mit Silber, Gold oder Platin. Eine typische Zusammensetzung ist Ag30Pd70 für hochsinternde Keramiken wie Barium-Niob-Cobalt-Perowskite oder Barium-Calcium-Zirkon-Titan-Perowskite, Ag80Pd20 für niedrigsinternde Keramiken wie Blei-Magnesium-Niob-Perowskite. Es können auch ternäre Legierungen wie $Pt_xAu_yPd_z$ oder $Ag_xAu_yPd_z$ mit x = 0,1 -0,6, y = 0,1-0,7 und z = 0,1-0,7 verwendet werden. Die Metallisierungspasten können zusätzlich noch andere metallische Komponenten, die beispielsweise titan-, zirkon- oder molybdän/manganhaltig sind, enthalten. Meist gehören außerdem organische Bindemittel und ein Lösungsmittel zu der Rezeptur, gelegentlich werden ihnen auch permanente keramische Binder zugefügt.

Die Bindemittelzusammensetzungen werden im allgemeinen so ausgewählt, daß man eine hohe Gründichte und Grünfestigkeit erhält, daß sich das Bindemittel beim Brennen leicht entfernen läßt und schließlich eine hohe Sinterdichte erreicht wird. Typische Bindemittelzusammensetzungen enthalten neben dem eigentlichen Binder und dem Lösungsmittel auch noch Plastifizierer, Verflüssiger, Benetzungsmittel und /oder Entschäumer.

Als Lösungsmittel wird vorzugsweise Wasser eingesetzt, eventuell mit Zusatz von nichtwässrigen Lösungsmitteln, wie Ethanol, Butanol, Isopropanol, Methylisobutylketon u.ä. Als Binder können z.B. Polyvinylalkohol, Polyacralester, Methylcellulose, Hydroxyethylcellulose, Polyvinylbutyralwachs u.ä. verwendet werden. Als Plastifizierer werden verschiedene Phtalatester, Glycole oder Glyzerin benutzt. Als Verflüssiger kommen Fettsäure-Ester wie Glyzerin-tri-oleate oder Menhaden in Frage, als Benetzungsmittel können beispielsweise Polyoxyethylester verwendet werden.

Der Ofenprozeß läuft im allgemeinen in vier Schritten ab: Trocknen, Binderausbrand, Sintern und Kühlen. Bei jedem dieser Schritte finden chemische Reaktionen statt, wie Desorption von gebundenem Wasser, Zersetzung von Ausgangsverbindungen für die dielektrischen Oxide, Festkörperreaktionen, Reaktionen, die zu flüssigen Phasen führen und Ausfällung von kristallinen Phasen.

Ein eigener Prozeßschritt für die Trocknung ist im allgemeinen nur für naß oder feucht geformte Teile notwendig, für trocken gepresste Teile kann dieser Prozessschritt wegfallen. Die Ofentemperatur beträgt in diesem Bereich maximal 95°C und die Ofenatmosphäre sollte wasserdampfarm sein, z.B. feuchter Stickstoff mit einem Wasserdampfanteil von 2,5 %.

Die Feuchtigkeit der Ofenatmosphäre darf aber auch nicht zu gering sein, um Trocknungsriße und ein vorzeitiges Austrocknen der Außenhaut der Teile zu verhindern. Bei einem Feuchtigkeitsanteil in der Ofenatmosphäre von 1 bis 5 % bleibt die Oberfläche der zu brennenden Teile "offenporig" und somit kann die Feuchtigkeit aus dem Inneren der Teile ungehindert austreten.

Die Binderausbrandzone im Ofen beginnt üblicherweise unmittelbar nach der Trockenzone. In diesem Bereich muß der Wasserdampfanteil im Ofengas mindestens 4 % sein. Der Sauerstoffgehalt der Ofenatmosphäre muß sorgfältig reduziert werden, um eine exotherme Oxidation des Binders zu vermeiden, die die Ofentemperatur unkontrolliert um mehrere hundert Grad erhöhen kann. Gleichzeitig würde diese exotherme Reaktion auch Rißbildung und Bruch in den Sinterteilen mit sich bringen. Neben dem Wasserdampf kann die Atmosphäre für den Brennprozeß bis 880°C auch ein Inertgas zB. ein Edelgas wie Helium, Neon, Argon, Krypton oder Xenon enthalten. Sie kann als Inertgas Stickstoff enthalten, sie kann außerdem auch $CO\text{-}CO_2$ oder $CO_2$ enthalten, um die Geschwindigkeit der Wassergasreaktion zu steuern. Bei 750°C werden auch die letzten Reste von Kohlenstoff ("Kohlenstoffnester) ausgebrannt.

Das Ende der Wassergasreaktion kann mit Hilfe einer X - Sonde ($O_2$ - Monitor) festgestellt werden. Wenn kein $H_2$ oder CO mehr als Reaktionsgas gebildet wird, erhöht sich der Sauerstoffstoffpartialdruck sprunghaft. Damit ist die Brennphase des Ofenprozeßes beendet.

Durch das erfindungsgemäße Verfahren kann eine prozeßverkürzende, schnellere Aufheizung in der ein gemeinsames System darstellenden Trocken- und Brennphase erfolgen.

Nachdem die Bindemittel vollständig ausgetrieben und ausreagiert sind, können die Teile in die Nachoxidationszone überführt werden. Sie beginnt mit einer Aufheizzone, in der die Teile auf 880°C aufgeheizt werden. In diesem Bereich wird die Ofenatmosphäre von inert in oxidierend verändert, d.h. es wird der Sauerstoffpartialdruck auf mindestens 20% erhöht. In dieser Zone wird eine Haltezeit in der Temperaturkurve gefahren, damit die Nachoxidation abgeschlossen ist, bevor die Schwindung der Teile im Sinterprozeß beginnt. Dies ist wichtig, damit der Sauerstoff gut in die Keramik eindringen kann.

Bei den Untersuchungen im Rahmen der vorliegenden Erfindung wurde überraschenderweise gefunden, daß es in dem relativ schmalen Temperaturbereich zwischen 880°C und 900°C möglich ist, oxidkeramische Werkstoffe, z.b. Bariumtitanat-Dielektrika, auch wenn sie durch den im Verlauf der Wassergasreaktion freigesetzten Wasserstoff schwach reduziert worden sind, durch eine nachfolgende Oxidation an Luft oder einem anderen Gasgemisch mit einem Sauerstoffanteil von mindestens 10 Volumenprozent in dem Temperaturbereich zwischen 880°C und 900°C wieder zu reoxidieren.

Dabei werden bei einem Wechsel der Ofenatmosphäre von wasserdampfhaltigem Inertgas zu sauerstoffhaltigem Gas die elektrokeramischen Oxide wieder in den elektrisch isolierenden, dielektrischen Zustand versetzt, ohne daß die palladiumhaltigen Elektroden zu PdO oxidiert werden. Die Gefahr der Delamination durch Volumenänderung der Eletroden bei diesem Fertigungsschritt ist damit eliminiert.

Bei den üblichen Verfahren nach dem Stand der Technik werden nach dem Binderausbrand die dann sehr zerbrechlichen calcinierten Vielschichtbauteile in einen Sinterofen überführt, wo sie an einer oxidierenden Atmosphäre nach einer genau definierten Temperaturkurve dicht gesintert werden.

Bei dem erfindungsgemäßen Verfahren können die Teile in demselben Ofen bleiben und dort fertig gesintert werden. Die Sinterung beginnt wiederum mit einer Aufheizphase bis zu der maximalen Sintertemperatur, die dann produktabhängig für eine bestimmte Sinterperiode gehalten werden muß.

Die Kühlzone folgt der Sinterzone. Die Abkühlung kann erreicht werden in dem eine exakt dosierte Menge an Luft oder einem anderen sauerstoffhaltigen Gas vom Ofenende her in den Ofen eingeblasen wird. Diese vorgewärmte Luft kann zur indirekten Beheizung der Trockenzone benutzt werden.

Der gesamte Ofenprozeß wird am besten in einem elektrisch beheizten Tunnelofen durchgeführt. Dabei werden die Bereiche mit unterschiedlicher Ofenatmosphäre durch Schirme oder Schleusen abgeteilt.

Über den Querschnitt des Ofenkanals gesehen soll die Ofenatmosphäre und die Temperaturverteilung gleichmäßig sein. Deshalb soll die Konvektionsgeschwindigkeit der Ofengase möglichst niedrig sein. Dadurch wird auch ein möglicher Austrag von leichtflüchtigen Oxiden aus den Sinterteilen vermieden.

Im Prinzip kann der Prozeß statt in einem Tunnelofen auch in einem Ein- oder Mehrkammerofen durchgeführt werden, jedoch ist dann der Austausch der Ofengase mit größeren Energieverlusten verbunden.

Während des Ofenprozesses reagieren in dem Temperaturbereich oberhalb von etwa 400°C die organischen Bestandteile im Binder mit dem Wasserdampf in der sogenannten "Wassergasreaktion":

$$21,6 \text{ kcal} + C + 2 H_2O \rightleftharpoons CO_2 + 2 H_2$$

Mit Hilfe dieser Reaktion werden allgemein Kohlenstoff oder Kohlenwasserstoffe bei höheren Temperaturen durch Einwirkung von Wasserdampf in Kohlendioxid und Wasserstoff umsetzen.

Wenn der Ausbrand des organischen Binders aus einem grünen Körper statt in Luft oder in sauerstoffarmen Sauerstoff/Stickstoffgemischen in einer wasserdampfhaltigen Atmosphäre durchgeführt wird, bewirkt die Wassergasreaktion eine totale Entfernung des organischen Binders, ohne daß der Palladiumanteil der Elektroden aufoxidiert wird.

Die wasserdampfhaltige Atmosphäre kann erzeugt werden, indem der Ofen ausschließlich mit Wasserdampf befüllt wird. Es kann auch ein Inertgas bei Raumtemperatur mit Wasserdampf beaufschlagt werden. Bei den technisch üblichen Inertgasen, wie Stickstoff und Argon ist der erzielbare Wasserdampfpartialdruck allerdings gering. Er liegt im Bereich von einigen Hundert Millibar.

Um höhere Partialdrucke zu erreichen, kann der Wasserdampf auch erst in den Ofenabschnitten mit Temperaturen oberhalb des Siedepunktes von Wasser eingebracht werden.

AUSFÜHRUNGSBEISPIEL

Es werden Vielschichtkondensatoren, bestehend aus einem Dielektrikum auf der Basis von $BaTiO_3$ mit Zusätzen aus $Nb_2O_5$ und $Co_3O_4$, hergestellt. Dieses keramische Oxidpulver kann von der Firma TAM Ceramics Inc., Niagara Falls, USA bezogen werden. Das dielektrische Material erfüllt den Standard X7R.

Die Rezeptur enthält 43,14 Gew.-% des genannten keramisches Pulvers, 0,13 Gew.-% Benetzungsmittel, 1,37 Gew.-% Plastifizierer, 34, 51 Gew.-% Lösungsmittel. 20,54 Gew.-% Binder und 0,01 Gew.-% Chelatbildner. Als Benetzungsmittel wurde Sorbitan Monolaureat (Atlas Chemical). als Plastifizierer Butyl-Benzyl-phtalat (Monsanto), als Lösungsmittel Trichloretylen und als Binder ein Gemisch aus 90% Ethly- und 10% Methylmethacrylat (Röhm & Haas) als 30%-ige Lösung in Methylethylketon verwendet.

Die Batchgröße ist 50-1001, der Ansatz wird 5-8h in einer Kugelmühle gemahlen.

Die Siebdruckpaste der Elektroden enthielt ein Gemisch von Pd/PdO = 1:1 mit Ethylcellulose als Binder und Diethylenglycolmonobutylethylacetat als Lösungsmittel.

Die grünen Vielschichtkondensatoren werden auf die übliche Art und Weise hergestellt. Es wird ein Schlicker aus dem keramischen Pulver und dem Binder gemischt. Daraus werden Folien gegossen, die nach dem Trocknen mit der Siebdruckpaste für die Elektroden bedruckt und dann gestapelt werden. Die Stapel werden gepresst, dann werden die grünen Kondensatoren ausgestanzt.

Die auf die oben genannte Art und Weise hergestellten grünen Vielschichtkondensatoren bestehen aus 50 dielektrischen Schichten und 51 siebgedruckten Elektroden sowie 2 Decklagen aus je 5 Einzelschichten. Die Dicke einer dielektrischen Schicht beträgt grün 40 bis 50 µm, die Dicke einer siebgedruckten Elektrodenschicht aus Palladiumpaste im grünen Zustand etwa 4µm. Das Gewicht eines einzelnen grünen Vielschichtkondensators beträgt ca. 22 mg.

Der Brennprozeß erfolgt in einem geschlossenen Ofen in einer Atmosphäre aus Wasserdampf und Stickstoff. Dabei hatte der Stickstoff einen Restgehalt von < 5ppm Sauerstoff. Der Stickstoff wird dem Wasserdampf im Verhältnis 30:1 gemischt. Die Durchflußrate liegt bei 100 ml/min.

Die Aufheizgeschwindigkeit des Ofens liegt bei 1°C /min, die Maximaltemperatur bei 880°C. Der Gewichtsverlust nach dem Ausbrand betrug ca. 10%. Nach dem Binderausbrand haben die calzinierten Kondensatoren bereits eine Dichte von 57-60% der theoretischen Dichte.

An den Binderausbrand schließt sich direkt die Sinterung der Kondensatoren an Luft in demselben Ofen an. Die Atmosphäre im Ofen wird von Wasserdampf/Stickstoff Luft gewechselt und die Temperatur bei 880°C für 30 min gehalten. Die Durchflußrate für Luft betrug wiederum ca. 100ml/min. Der Ofen wird mit einer Heizrate von 5°C/min auf eine Endtemperatur von 1300°C aufgeheizt und nach einer Haltezeit von 2h mit gleicher Geschwindigkeit kontrolliert abgekühlt. Die Dichte der so gebrannten und gesintereten Vielschichtkondensatoren liegt bei 96-98 % der theoretischen Dichte.

CHARAKTERISIERUNG DER KONDENSATOREN

Bei der mikroskopischen Untersuchung der erfindungsgemäß in Wasser dampf/Stickstoff gebrannten und ab 880°C in Luft gesinterten Kondensatoren wurde keine Anzeichen von Delamination gefunden.

Die gemessenen Werte für die Kapazitäten, dielektrischen Verluste und Isolationswiderstände zeigen, daß die oxidkeramische Komponente vollständig oxidiert war.

Um den restlichen Anteil an Kohlenstoff zu bestimmen, wurde die gebrannte Keramik gebrochen, gemahlen, im Sauerstoffstrom geglüht und das gebildete $CO_2$ bestimmt. Es konnte kein Kohlenstoff mehr nachgewiesen werden.

**Patentansprüche**

1. Verfahren zur Herstellung eines keramischen elektronischen Bauteils, das im wesentlichen aus einer dielektrischen Oxidkeramik und mindestens einer palladiumhaltigen Komponente besteht, durch Brennen und Sintern eines organische Bindemittel enthaltenden grünen Körpers,

   dadurch gekennzeichnet,
   daß der Brennprozeß einen ersten Schritt umfaßt, bei dem das Bindemittel aus dem bindemittelhaltigen grünen Körper durch eine Wassergasreaktion in wasserdampfhaltiger, im wesentlichen sauerstofffreier Atmosphäre bei Temperaturen zwischen 20 und 880°C entfernt wird und in einem zweiten Schritt die dielektrische Oxidkeramik in einer Atmosphäre mit einem Sauerstoffgehalt von 10 bis 100 Volumen-% bei einer Temperatur von 880°C bis 900°C nachoxidiert wird.

2. Verfahren zur Herstellung eines keramischen elektronischen Bauteils nach Anspruch 1,

<u>dadurch gekennzeichnet</u>,
daß die wasserdampfhaltige, im wesentlichen sauerstofffreie Atmosphäre ein Inertgas enthält.

3. Verfahren zur Herstellung eines keramischen elektronischen Bauteils nach Anspruch 1 und 2,

<u>dadurch gekennzeichnet</u>,
daß die Wassergasreaktion mit bei Raumtemperatur befeuchteten Stickstoff bei einer Reaktionstemperatur von 400°C bis 850°C durchgeführt wird.

4. Verfahren zur Herstellung eines keramischen elektronischen Bauteils nach Ansopruch 1 und 2,

<u>dadurch gekennzeichnet</u>,
daß der Wasserdampfgehalt in der wasserdampfhaltigen, im wesentlichen, sauerstofffreien Atmosphäre in der Temperaturzone zwischen 200°C und 800°C durch zusätzlichen Wasserdampf erhöht wird.

5. Verfahren zur Herstellung eines keramischen elektronischen Bauteils nach Anspruch 1 bis 4,

<u>dadurch gekennzeichnet</u>,
daß die palladiumhaltige Komponente außerdem Platin, Silber, Gold und/oder Nickel enthält.

6. Verfahren zur Herstellung eines keramischen elektronischen Bauteils nach Anspruch 1 bis 5,

<u>dadurch gekennzeichnet</u>,
daß die dielektrische Oxidkeramik im wesentlichen aus einem einfachen oder substituierten Titanat oder einem einfachen oder substituierten Ferrit besteht.

7. Verfahren zur Herstellung eines keramischen elektronischen Bauteils nach Anspruch 1 bis 6,

<u>dadurch gekennzeichnet</u>,
daß die dielektrische Oxidkeramik aus einem mit Niob und Kobalt dotiertem Bariumtitanat und die metallische komponente aus einer Silberpalladiumlegierung bestehen.